# EUROPEAN PATENT SPECIFICATION

(11) **EP 3 453 026 B1**
(45) Date of publication and mention of the grant of the patent: **25.03.2020**
(21) Application number: 17733004.0
(22) Date of filing: 04.05.2017
(51) Int. Cl.: G21C 3/322

(54) **NUCLEAR REACTOR WITH FUEL ELEMENTS EQUIPPED WITH A COOLING DUCT**
KERNREAKTOR MIT BRENNELEMENTEN MIT EINEM KÜHLKANAL
RÉACTEUR NUCLÉAIRE À ÉLÉMENTS COMBUSTIBLES ÉQUIPÉS D'UN CONDUIT DE REFROIDISSEMENT

(30) Priority: 04.05.2016 IT UA20163715
(43) Date of publication of application: 13.03.2019
(73) Proprietor: Hydromine Nuclear Energy S.A.R.L., 1273 Luxembourg (LU)
(72) Inventor: CINOTTI, Luciano, 16036 Recco (IT)
(74) Representative: Cernuzzi, Daniele
(86) International application number: PCT/IB2017/052607
(87) International publication number: WO 2017/191594

(56) References cited:
- GB-A- 845 804
- US-A- 3 406 090
- US-A- 4 675 154

## Description

### TECHNICAL FIELD

The present invention relates to a nuclear reactor, in particular a nuclear reactor cooled with liquid metal or molten salts, constituted by a number of fuel elements characterized by a cooling system during fuel replacement of new conception.

### STATE OF THE PRIOR ART

During normal operation of the reactor, the active part of the fuel elements is completely immersed in the cooling fluid, with possibly only the inactive head emerging above the hot manifold level.

During fuel replacement, the exhausted elements are transferred from the liquid metal or molten salts of the reactor to an auxiliary water pool. The operation requires extraction of the exhausted fuel elements from the reactor and their cooling via forced gas circulation during the entire transfer period to the water pool, this circulation being implemented by coupling the fuel element to an auxiliary circuit of the fuel transfer machine via the grippers of said fuel transfer machine, which connect to the head of the fuel element. A cooling duct runs from the head of the fuel element and reaches the fuel rods contained in a box-like structure that, as a rule, extends beyond the lower active end of the fuel element and is in hydraulic continuity with the foot of the fuel element, in turn provided with a duct through which primary cooling fluid enters during normal reactor operation, and auxiliary cooling gas exits in the fuel replacement situation.

Cooling must always be ensured, also taking into account possible unforeseen circumstances, such as the temporary blockage of the fuel element in any position along the transfer path.

Obviously, the most critical situation is of possible blockage with the active part of the fuel element partially or totally extracted from the primary cooling fluid, with the foot of the element still immersed in the primary cooling fluid and the circulation of auxiliary cooling gas prevented by blockage of the circulation duct with the primary cooling fluid in which it is still partially immersed.

Exemplary prior art documents are US 4 675 154 A, US 3 406 090 A, or GB 845 804 A.

### SUBJECT OF THE INVENTION

One object of the present invention is to provide a nuclear reactor that overcomes the indicated drawbacks of known solutions and has further constructional and safety advantages.

The present invention thus relates to a nuclear reactor, as defined in the appended claim 1 and, for its auxiliary characteristics and plant configurations, in the dependent claims.

### BRIEF DESCRIPTION OF DRAWINGS

The invention is described in the following non-limitative embodiment, referring to the figures of the accompanying drawings, in which:
- Figure 1 is a schematic overall view in longitudinal section of a nuclear reactor according to the invention; and
- Figure 2 is an enlarged view in longitudinal section of the active part of the core of the reactor in Figure 1.

### PREFERRED EMBODIMENT OF THE INVENTION

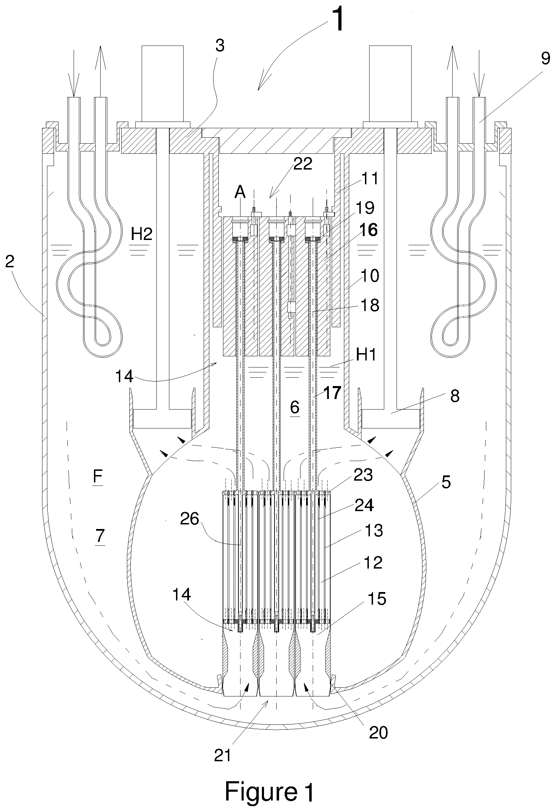

Referring to Figure 1, particularly representative of a liquid-metal or molten salt cooled nuclear reactor 1, the nuclear reactor 1 comprises a substantially cup or pool-shaped vessel 2 and a closure structure 3 placed on top of the vessel 2; the vessel 2 contains a core 4 and a hydraulic separation structure 5 delimiting a hot manifold 6 and a cold manifold 7 in which a primary cooling fluid F of the core 4 circulates. The primary fluid F has a free surface that in normal operation of the reactor 1 is at different levels H1 and H2 in the manifolds 6 and 7. The vessel 2 houses circulating pumps 8 for the primary fluid F, heat exchangers 9 through which the primary fluid F passes and which transfer the power generated in the core 4 to a secondary fluid, as well as other known components that are not shown.

An anchoring structure 11 for the fuel elements 12 is inserted inside the upper part 10 of the hydraulic separation structure 5.

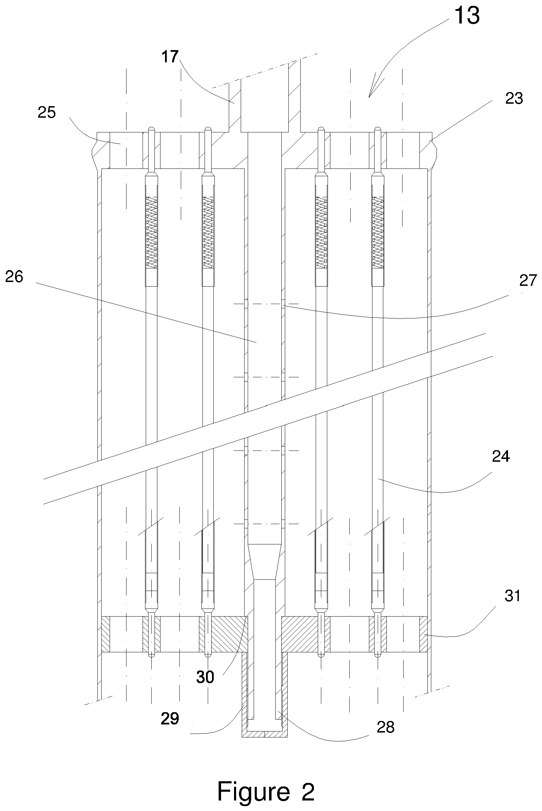

Referring to Figure 2 as well, the fuel elements 12 extend along respective longitudinal and parallel axes (A) and have respective active parts 13 and respective service parts 14, which comprise a foot 15 and a head 16, respectively at the bottom and the top of the fuel elements, and a connection shaft 17 between the active part 13 and the head 16.

The shaft 17 possesses a certain amount of mechanical flexibility and is inserted with its upper portion 18 in an empty cylindrical volume inside the head 16 of the fuel element 12. This upper portion 18 is mechanically coupled to the head 16 by a spherical coupling 19, not described in detail as it is current technology, located at its top end.

The feet 15 of the fuel elements 12 are in contact with each other and, as a whole, constitute a bundle that is radially constrained by the inner rim 20 of the opening 21 on the bottom of the hydraulic separation structure 5.

The head 16 of the fuel element 12 houses support devices 22 that constrain the fuel elements 12 to one another and to the anchoring structure 11.

Under normal reactor operating conditions, the heads 16 of the fuel elements 12 are above the level H1 of the primary fluid in the hot manifold, while the respective active parts 13 are completely immersed to enable their cooling via circulation of primary cooling fluid, which enters from the cold manifold 7 to the fuel elements 12 through respective feet 15, and exits into the hot manifold 6 through the upper support grid 23 of the fuel rods 24 that is provided with holes 25.

The shaft 17 is hollow and hydraulically connected to a tubular structure 26 that extends centrally for the entire active part 13 of the fuel elements 12.

The tubular structure 26 is characterized by being provided with a plurality of small holes 27 along the entire length corresponding to the active part 13 of the fuel element 12. The tubular structure 26 is conveniently closed at the bottom end by a threaded coupling with a plug 29 that, together with a shoulder 30 made on the tubular structure 26, constitutes the locking system of the lower grid 31 of the fuel element 12.

With a hydraulically sealed coupling between the grippers of the fuel replacement machine, both known solutions and not described within present invention, and the head 16 of the fuel element 12, and by means of the hydraulic duct that runs from the head 16 and through the shaft 17 to feed the tubular structure 26 of the fuel element, it is possible to inject cooling gas through the holes 27 of the tubular structure 26 and inside the active part 13 of the fuel elements 12 during fuel replacement operations.

A similar possibility also exists with different constructional solutions for the fuel element 12, such as those that do not provide for a shaft 17, but a head connected directly to the upper grid 23.

The advantages of the present invention clearly emerge from the foregoing description:
- the availability of a system of injecting cooling gas along the entire axial profile of the active part 13 of the fuel element 12 allows cooling the active part of the element even in a hypothetical, accidental situation during the replacement operation, where the fuel element 12 remains blocked in a position where only the active part 13 of the element 12, or only a portion thereof, emerges above the level H1 of the primary cooling fluid and the circulation of cooling gas through the entire active part 13 is obstructed by the primary cooling fluid that prevents discharge of cooling gas through the foot 15; in this case, the part that protrudes from the primary cooling fluid is cooled by gas escaping from the small holes 27 in correspondence to the emerged active parts 13 and which leaves the fuel element 12 through the holes 25 in the upper grid 23.
- the injection of cooling gas from inside the active parts 13 particularly favours cooling the inner fuel rods that, unlike the outer ones, cannot be efficiently cooled by outward irradiation from the active parts 13.
- the tubular structure 26, which extends for the entire active part 13 of the fuel elements 12, can be conveniently used as a support for the lower grid and, if necessary, also as a support for intermediate grids of the fuel rods.
- the tubular structure 26, which extends for the entire active part 13 of the fuel elements 12, can be conveniently used to house control rods of the core 4, rods that are to be removed before extraction of the fuel element 12 to use the tubular structure 26 as a hydraulic duct for cooling gas injection.

Finally, it is understood that numerous modifications and variants can be made regarding the reactor set forth herein without departing from the scope of the appended claims.

## Claims

1. A nuclear reactor (1), comprising a vessel (2) that houses a core (4), comprising a bundle of fuel elements (12) being arranged to be immersed in a primary cooling fluid, F, of the core; the reactor being **characterized in that** the fuel elements (12) comprise a head (16), fuel rods (24) forming an active part (13), and a connection shaft (17) between the active part (13) and the head (16), wherein the fuel elements (12) extend along respective longitudinal and parallel axes, A, and wherein the head (16) of said fuel elements (12) is by means of the connection shaft (17) hydraulically connected to a tubular structure (26) that extends centrally for the entire active part (13) of the fuel elements (12); the tubular structure (26) being hydraulically sealed at the bottom end (28) and provided with a plurality of holes (27) along the entire length corresponding to the active part (13) of the fuel elements (12).

2. The nuclear reactor according to claim 1, wherein the tubular structure (26) is closed at a bottom end (28) by a plug (29) that, together with a shoulder (30) made on the tubular structure (26), constitute a locking system of a lower grid (31) of the fuel elements (12).

3. The nuclear reactor according to claim 1, wherein, by means of a hydraulically sealed coupling between grippers of a fuel replacement machine and the head (16) of the fuel elements (12), it is possible to inject cooling gas through the holes (27) of the tubular structure (26) and inside the active part (13) of the fuel elements (12) during fuel replacement operations.

4. The nuclear reactor according to claim 1, wherein, during fuel replacement operations, it is possible to make the cooling gas escape from the fuel elements (12) through holes (25) in an upper support grid (23) of the fuel rods (24).

## Patentansprüche

1. Kernreaktor (1) mit einem Behälter (2), der einen Kern (4) mit einem Bündel von Brennelementen (12) beherbergt, die derart angeordnet sind, dass sie in einem primären Kühlfluid, F, des Kerns eingetaucht sind;
wobei der Reaktor **dadurch gekennzeichnet ist, dass** die Brennelemente (12) einen Kopf (16), einen aktiven Teil (13) bildende Brennstäbe (24) und einen Verbindungschaft (17) zwischen dem aktiven Teil (13) und dem Kopf (16) umfassen, wobei die Brennelemente (12) sich entlang jeweiliger längsverlaufender und paralleler Achsen, A, erstrecken und wobei der Kopf (16) der Brennelemente (12) mit Hilfe des Verbindungsschafts (17) hydraulisch mit eine rohrförmigen Struktur (26) verbunden ist, die sich zentral über den gesamten aktiven Teil (13) der Brennelemente (12) erstreckt; wobei die rohrförmige Struktur (26) an dem unteren Ende (28) hydraulisch abgedichtet und mit mehreren Löchern (27) entlang der gesamten Länge versehen ist, die dem aktiven Teil (13) der Brennelemente (12) entspricht.

2. Krenreaktor nach Anspruch 1, wobei die rohrförmige Struktur (26) an einem unteren Ende (28) über ein Absperrteil (29) geschlossen ist, das, zusammen mit einer an der rohrförigen Struktur (26) ausgebildeten Schulter (30), ein Blockiersystem eines unteren Gitters (31) der Brennelemente (12) bildet.

3. Kernreaktor nach Anspruch 1, wobei es mittels einer hydraulisch abgedichteten Kopplung zwischen Greifern einer Brennmittel-Austauschmaschine und dem Kopf (16) der Brennelemente (12) möglich ist, während der Brennmittel-Austauschvorgänge Kühlgas durch die Löcher (27) der rohrförmigen Struktur (26) und in das Innere des aktiven Teils (13) der Brennelemente (12) einzuspeisen.

4. Kernreaktor nach Anspruch 1, bei dem es während der Brennmittel-Austauschvorgänge möglich ist, das Kühlgas von den Brennelementen (12) durch Löcher (25) in einem oberen Tragegitter (23) der Brennstäbe (24) entweichen zu lassen.

## Revendications

1. Réacteur nucléaire (1), comprenant une cuve (2) qui abrite un cœur (4), comprenant une grappe d'éléments combustibles (12) agencés pour être plongés dans un fluide primaire de refroidissement, F, du cœur ;
le réacteur étant **caractérisé en ce que** les éléments combustibles (12) comprennent une tête (16), des crayons combustibles (24) formant une partie active (13), et un arbre de liaison (17) entre la partie active (13) et la tête (16), les éléments combustibles (12) s'étendant le long d'axes longitudinaux et parallèles respectifs, A, et la tête (16) desdits éléments combustibles (12) étant, au moyen de l'arbre de liaison (17), reliée hydrauliquement à une structure tubulaire (26) qui s'étend centralement pour la partie active (13) entière des éléments combustibles (12) ; la structure tubulaire (26) étant scellée hydrauliquement à l'extrémité inférieure (28) et pourvue d'une pluralité de trous (27) sur la longueur entière correspondant à la partie active (13) des éléments combustibles (12).

2. Réacteur nucléaire selon la revendication 1, dans lequel la structure tubulaire (26) est fermée à une extrémité inférieure (28) par un bouchon (29) qui, conjointement avec un épaulement (30) élaboré sur la structure tubulaire (26), constitue un système de verrouillage d'une grille inférieure (31) des éléments combustibles (12).

3. Réacteur nucléaire selon la revendication 1, dans lequel, au moyen d'un raccord scellé hydrauliquement entre des grappins d'une machine de remplacement de combustible et la tête (16) des éléments combustibles (12), il est possible d'injecter un gaz de refroidissement par les trous (27) de la structure tubulaire (26) et à l'intérieur de la partie active (13) des éléments combustibles (12) pendant des opérations de remplacement de combustible.

4. Réacteur nucléaire selon la revendication 1, dans lequel, pendant des opérations de remplacement de combustible, il est possible de faire s'échapper le gaz de refroidissement des éléments combustibles (12) par des trous (25) dans une grille de support supérieure (23) des crayons combustibles (24).
